# EUROPÄISCHE PATENTSCHRIFT

(11) **EP 3 361 036 B1**
(45) Veröffentlichungstag und Bekanntmachung des Hinweises auf die Patenterteilung: **08.04.2020**
(21) Anmeldenummer: 18156494.9
(22) Anmeldetag: 13.02.2018
(51) Int. Cl.: H05B 3/84, H05B 3/14, H05B 3/06, H05B 3/04, F24D 13/02, E06B 3/66

(54) **MODUL ZUR ENERGIEÜBERTRAGUNG**
MODULE FOR ENERGY TRANSFER
MODULE DE TRANSMISSION D'ÉNERGIE

(30) Priorität: 13.02.2017 DE 102017102793
(43) Veröffentlichungstag der Anmeldung: 15.08.2018
(73) Patentinhaber: Vestaxx GmbH, 12489 Berlin (DE)
(72) Erfinder: Häger, Andreas, 12357 Berlin (DE)
(74) Vertreter: Gulde & Partner

(56) Entgegenhaltungen:
- WO-A2-2007/092926
- DE-A1- 2 350 614

## Beschreibung

. Die Erfindung betrifft eine elektrisch beheizbare Isolierglasscheibe für Fenster oder Glastüren, welche eine mit einer elektrisch leitenden Schicht beschichtete Glasscheibe und einen Abstandshalter aufweist.

. Bekannt sind elektrisch beheizte Flächenheizungen wie z.B. transparente Glas bzw. Fensterflächen. Solche Flächen werden z.B. im Bereich der Gefrier- und Kühlschränke in Supermärkten eingesetzt, um das Beschlagen der Scheiben zu verhindern. Hierzu wird ein transparentes leitendes Oxid (TCO) mittels Dünnschichttechnologie auf das Glassubstrat aufgebracht. Zum elektrischen Anschluss werden üblicherweise aufgeklebte Kontaktbänder oder aufgedruckte Kontaktstreifen eingesetzt. Werden diese an einen Stromkreis angeschlossen, erwärmt sich das transparent leitende Oxid, da dieses als ohmscher Widerstand agiert. Die gesamte Glasscheibe wird dadurch erwärmt und reduziert somit das Kondensieren auf der Scheibenoberfläche signifikant. Um die Kontaktbänder am Stromkreis anzuschließen, werden üblicherweise flexible Kabel verwendet. Diese sind an einem Ende mit den Kontaktbändern der Glasscheibe verbunden, am anderen Ende über den Rahmen zum elektrischen Netz geführt. Problematisch ist hierbei insbesondere, dass die Kontaktierungsstreifen vom mit Gas gefülltem Scheibenzwischenraum nach außen geführt werden müssen, ohne das ein Leck entsteht durch dass das Gas nach und nach entweichen kann, welches die Lebensdauer der Glaseinheit und deren Funktion beeinträchtigt.

. Eine weitere Art der elektrischen Beheizung stellen beheizte Gebäudefenster und Glastüren dar. Solche Elemente werden z.B. von der Firma Interpane aus Lauenförde angeboten. Der grundsätzliche Aufbau ist analog zum oben beschriebenen Aufbau der Gefrierschranktüren. Bei Anschluss des Fensters an den elektrischen Stromkreis wird das Fenster ebenfalls erwärmt und beheizt über Strahlung, Konvektion und Leitung das Gebäudeinnere. Zur Übertragung des elektrischen Stroms von der Glasscheibe durch den Abstandshalter oder an ihm vorbei werden hierbei Anschlussstücke oder Leitungen im Bereich des Abstandhalters verwendet. Problematisch ist hierbei ebenfalls der Kontakt zum Abstandshalter und das Rausführen der Leitung aus dem mit Gas oder Luft befüllten Scheibenzwischenraum. Ebenfalls ist es in der Isolierglas-Fertigung problematisch, das kontaktierte Leiterfähnchen an die Kontaktstelle zur Durchleitung durch den Abstandshalter zu führen. Diese zusätzliche elektrische Verbindung ist sehr aufwendig und zumeist nur manuell durchführbar.

Die DE 2350614 A1 beschreibt ein Fenster, insbesondere eine Mehrfachscheibe, die wenigstens zwei Glasscheiben, welche auf ihrem Umfang durch einen Abstandshalter getrennt sind, der von einer undurchlässigen Dichtung derart eingefasst ist, dass ein geschlossener Luftraum zwischen den beiden Scheiben verbleibt, enthält und mit einem Heizleitersystem ausgerüstet ist. Der Abstandshalter besteht vorzugsweise aus einem Metallprofil. Das Heizleitersystem wird von Widerständen gebildet, die auf der Innenfläche wenigstens einer der Glasscheiben angeordnet sind. Diese Widerstände können in an sich bekannter Weise von einer durchgehenden Schicht aus jedem leitenden durchsichtigen Material, beispielsweise Gold oder Zinnoxid, gebildet sein. Sie können jedoch auch die Form einzelner Widerstände aufweisen, beispielsweise in Form von Bändern oder Fäden unter Verwendung von Emailleleitern, insbesondere auf der Basis von Silber, welche im Siebdruck aufgebracht und bei hohen Temperaturen eingebrannt werden.

Aus der WO 2007/092926 A2 ist eine elektrisch beheizbare Isolierglasscheibe für Fenster oder Glastüren gemäß dem einleitenden Teil des Anspruchs 1 bekannt, welche eine mit einer elektrisch leitenden Schicht beschichtete Glasscheibe und einen Abstandshalter aufweist. Der Abstandshalter wird durch ein Kontaktstreifen und ein elastisches Material realisiert.

. Es ist die Aufgabe der vorliegenden Erfindung, eine elektrisch beheizbare Isolierglasscheibe zu schaffen, welche einfach und preiswert herstellbar sowie leicht zu montieren ist und einen zuverlässigen Betrieb gewährleistet.

Diese Aufgabe wird gelöst durch die Merkmale im Anspruch 1. Zweckmäßige Ausgestaltungen der Erfindung sind in den Unteransprüchen enthalten.

Die Abstandshalter selber bzw. Bestandteile von ihm fungieren zusätzlich als Kontaktstreifen und transportieren den Strom an die Außenseite des mit Gas oder Luft gefüllten Scheibenzwischenraums. Die Abstandshalter bestehen für diese Aufgabe aus mindestens zwei elektrisch leitenden und mindestens zwei elektrisch isolierten Teilen, damit es nicht zum Kurzschluss kommt. Zwei in die stromführenden Abstandshalter gesteckte Kontaktstücke (Eckstücke) mit vorkonfektioniertem steckbaren Kabelanschluss oder befestigte Kontaktstücke (Steckkontakte) im Bereich des Abstandhalters erleichtern in der automatischen Fertigung die Stromabführung nach außen. Der normale Fertigungsablauf wird dadurch nicht behindert und das Element kann so schneller und kostengünstiger hergestellt werden. Die Eckstücke sind bereits mit einer steckbaren Anschlussleitung vorkonfektioniert und weisen einen Kontaktstecker auf, der bei der Fertigung durch einen Blindstopfen verschlossen ist. Nach Vernetzen der Abdichtungsmittel wird der Blindstopfen entfernt und die vorkonfektionierte Leitung angeschlossen.

. Ein besonderer Vorteil der Erfindung besteht darin, dass der Abstandshalter elektrisch leitend ausgebildet und an ihm ein elektrisch leitendes Kontaktmaterial angeordnet ist.

. Dementsprechend verfügt der leitfähige Abstandshalter über mindestens eine mit elektrisch leitfähigem Material benetzte Kontaktfläche zur leitfähigen Innenscheibe hin. Bei der Fertigung wird die Glasscheibe auf dem mit Butyl benetzten Abstandshalter sowie den mit Leitmaterial benetzte Fläche gepresst. Dadurch entsteht einerseits der hermetisch abgeschlossene Scheibenzwischenraum und zum anderen die Kontaktierung zur leitfähigen Schicht auf der Glasscheibe. Die Glasscheibe ist beispielsweise eine beheizbare Fensterscheibe oder eine beheizbare Glastür und die elektrisch leitende Schicht ein Metalloxid.

. Eine einfache Ausführung der Erfindung im Isolierglasbereich sieht einen aus mehreren Teilen bestehenden Abstandshalterrahmen vor. Zwei Teile (die Abstandshalter) sind aus einem elektrisch leitenden Material oder mit einem elektrisch leitenden Material überzogen und verfügen auf einer Seite ein über die gesamte Länge angebrachtes Leiterfähnchen, welches mit dem ggf. bereits aufgebrachtem Kontaktmaterial den elektrischen Kontakt zur beschichteten Scheibe herstellt. An jeweils jedem Ende wird ein Kontaktstück (Eckstück) aufgesteckt und dieses dann mit dem elektrisch nichtleitenden Abstandshalter verbunden. Somit gibt es mindestens zwei elektrisch leitende Rahmenstücke und mindestens zwei elektrisch leitende Kontaktstücke sowie zwei elektrisch isolierende Rahmenteile.

. Eine weitere Ausführung sieht den Kontakt zur einer Glaseinheit zur elektrochromen Verglasung vor. Auch bei diesem Element muss die elektrische Kontaktierung durch den Abstandshalter erfolgen. Der Abstandshalter könnte ebenfalls auch einen Akku zum Schalten der elektrochromen Verglasung aufnehmen. Der Akku wird durch ein im Glas integriertes kleines Photovoltaikmodul gespeist. Dadurch wird ggf. eine elektrische Anbindung an das elektrische Hausnetz überflüssig.

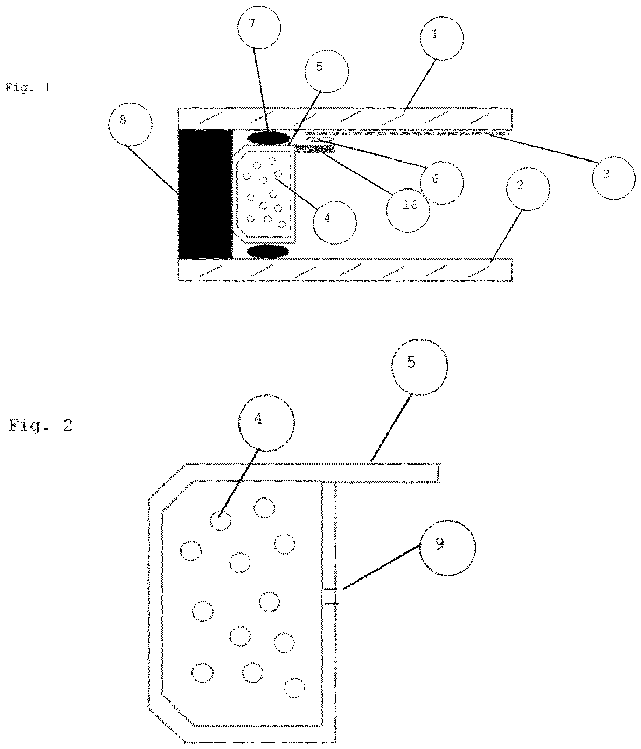

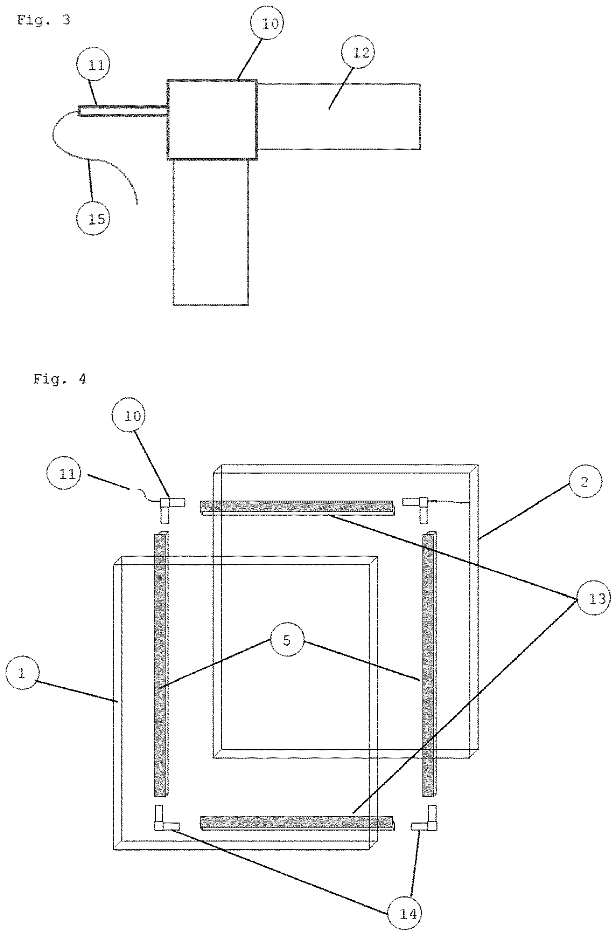

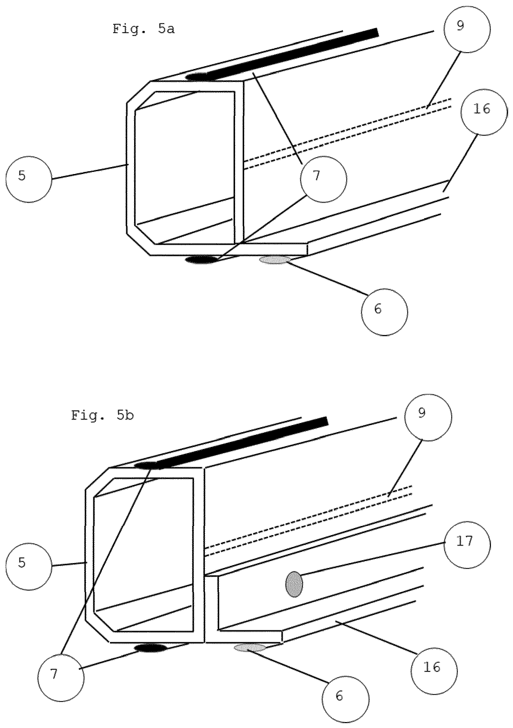

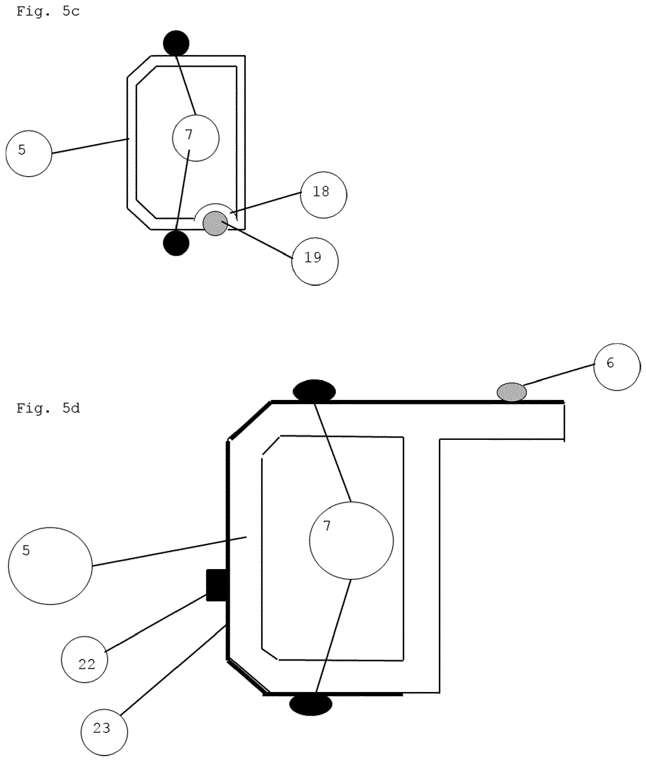

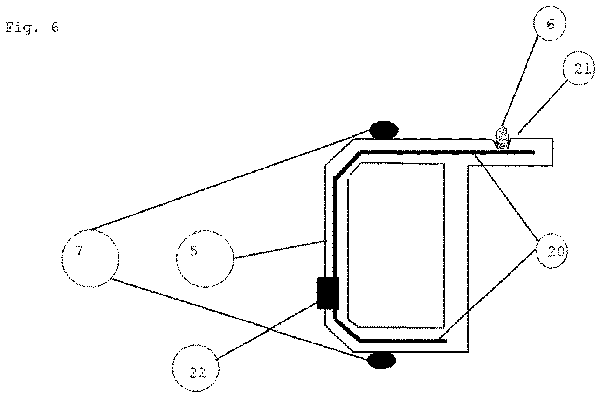

. Die Erfindung soll nachstehend an Hand von in den Figuren zumindest teilweise dargestellten Ausführungsbeispielen näher erläutert werden. Es zeigen:
. Fig. 1 zeigt eine prinzipielle Schnittdarstellung eines Isolierglasaufbaus mit beheizbarem Glassubstrat, wie sie für Fenster oder Türen eingesetzt werden.
. Fig. 2 zeigt eine Ausführung des Abstandhalters als elektrisch leitendes Element mit Leiterfähnchen.
. Fig. 3 zeigt eine Ausführung des Eckverbinders mit vorkonfektionierter Anschlussleitung.
. Fig. 4 zeigt die Bestandsteile eines Isolierglasaufbaus mit zu einem Rahmen kombinierbaren Abstandshaltern, Eckanschlussteilen und Gläsern.
. Fig. 5a-c zeigen die unterschiedlichen Varianten der Anordnung des Kontaktmaterials.
. Fig. 5d zeigt die Ausführung eines Abstandshalters, wobei die leitfähige Schicht außen auf dem Abstandshalter aufgebracht ist.
. Fig. 6 zeigt die Ausführung eines Kunststoffabstandshalters mit metallischer Armierung und Kerbung, wodurch der Kontakt des leitfähigen Materials von der Armierung zur beschichteten Glasfläche hergestellt wird. Der Strom wird durch die Steckkontaktstelle abgeführt.

In Fig.1 ist der grundsätzliche Aufbau einer beheizten Isolierglasscheibe im Schnitt dargestellt. Die aktive Glasscheibe 1 ist mittels einer dünnen elektrisch leitenden Schicht 3, im vorliegenden Ausführungsbeispiel ein Metalloxid, versehen. Um diese elektrisch zu kontaktieren, ist auf dem mit Trocknungsmittel 4 gefülltem Abstandshalter 5 aus elektrisch leitendem Material mit Leitungsfähnchen 16 ein elektrisch leitendes Kontaktmaterial 6 aufgebracht. Die Glasscheiben 1 und 2 werden mittels eines Primärdichtungsmaterials 7 zusammengepresst und mit einem Sekundärdichtungsmaterial 8 versiegelt und der Scheibenzwischenraum somit hermetisch abgedichtet.

. Fig. 2 zeigt eine Schnittdarstellung des aus leitendem Material bestehenden Abstandshalters 5 mit Trocknungsmittel 4, Leiterfähnchen 16 und Diffussionsöffnung 9.

. Fig. 3 zeigt die Ausführung des elektrisch leitenden Kontakteckstücks 10 mit Kabelanschluss 11, Leitung 15 und verjüngten Einführungsflanschen 12 in einer Draufsicht. Die Einführungsflansche 12 werden in die leitenden Abstandshalter 5 sowie die nichtleitenden Abstandshalter 13 eingeführt und dienen zusammen als kompletter Abstandshalterrahmen.

. Fig. 4 zeigt die Komponenten eines zweischaligen Isolierglasaufbaus. Dabei werden die beiden Glasscheiben 1 und 2 mit den leitenden Abstandshaltern 5 mit Leiterfähnchen 16 und Kontaktmaterial 6 sowie Primärdichtung 7 sowie den nichtleitenden Abstandshaltern 13 ohne Leiterfähnchen und mit Primärdichtung sowie den Eckverbindern 10 mit Kabelanschluss 11 und Eckverbinder 14 ohne Kabelanschluss zu einem Isolierglasverbund zusammengepresst. Die vorkonfektionierte Anschlussleitung dient zum Anschluss des Isolierglasheizelementes an den Fenster- bzw. Türflügel.

Die Fig. 5a und 5b zeigen eine Ausführungsvariante des Abstandshalters 5 mit streifenförmigem Primärdichtungsmaterial 7 und auf dem Leiterfähnchen 16 angeordnetem Kontaktmaterial 6. Gemäß Fig. 5a ist das Leiterfähnchen 16 eine verlängerte Wandung des Abstandshalters 5, gemäß der Fig. 5b ist das Leiterfähnchen 16 ein Teil eines abgewinkelten, mit dem Abstandshalter 5 durch Klebung oder mechanische Verbindung 17 verbundenen Zusatzelementes.

In Fig. 5c nun ist eine Ausführungsvariante dargestellt, bei der das elektrisch leitende Kontaktmaterial in Form einer Schnur 1 mit kreisförmigem Querschnitt oder eines Schlauches in eine an dem Abstandshalter 5 angeordneten Nut 18 eingepasst ist.

. Fig. 6 zeigt einen mit metallischen Armierungen 20 aufgebauten Abstandshalter 5 aus Kunststoff, wobei die ummantelnde Kunststoffschicht mit einer Kerbe 21 versehen ist, durch welche der Kontakt des in die Kerbe 21 eingebrachten Kontaktmaterials 6 zu der Armierung 20 und der leitfähigen Schicht 3 der aktiven Glasscheibe 1 hergestellt wird.

## Patentansprüche

1. Elektrisch beheizbare Isolierglasscheibe für Fenster oder Glastüren, welche eine mit einer elektrisch leitenden Schicht beschichtete Glasscheibe und Abstandshalter aufweist,
wobei die Abstandshalter (5) elektrisch leitend ausgebildet sind und an ihnen ein elektrisch leitendes Kontaktmaterial (6) angeordnet ist und die Abstandshalter (5) oder Bestandteile von ihnen als Kontaktstreifen zur elektrischen Kontaktierung der elektrisch leitenden Schicht (3) fungieren,
**dadurch gekennzeichnet, dass** die elektrisch leitenden Abstandshalter (5) mit elektrisch nicht leitenden Abstandshaltern (13) über Eckverbinder (10, 14) zu einem Abstandshalterrahmen kombiniert sind.

2. Elektrisch beheizbare Isolierglasscheibe nach Anspruch 1, **dadurch gekennzeichnet, dass** die elektrisch leitende Schicht (3) ein Metalloxid ist.

3. Elektrisch beheizbare Isolierglasscheibe nach einem der voranstehenden Ansprüche, **dadurch gekennzeichnet, dass** die elektrisch leitenden Abstandshalter (5) ein Leiterfähnchen (16) aufweisen, an welchem das elektrisch leitende Kontaktmaterial (6) angeordnet ist.

4. Elektrisch beheizbare Isolierglasscheibe nach einem der voranstehenden Ansprüche 1 bis 2, **dadurch gekennzeichnet, dass** die elektrisch leitenden Abstandshalter (5) eine Nut (18) aufweisen, in welcher das elektrisch leitende Kontaktmaterial (6) angeordnet ist.

5. Elektrisch beheizbare Isolierglasscheibe nach Anspruch 4, **dadurch gekennzeichnet, dass** das elektrisch leitende Kontaktmaterial (6) eine Schnur (19) oder ein Schlauch ist, die in die Nut (18) einpassbar ausgebildet sind.

6. Elektrisch beheizbare Isolierglasscheibe nach Anspruch 4, **dadurch gekennzeichnet, dass** das elektrisch leitende Kontaktmaterial (6) auf die Oberfläche der Abstandshalter (5) aufgebracht ist und über eine befestigte Steckkontaktstelle (22) abgeleitet wird.

7. Elektrisch beheizbare Isolierglasscheibe nach einem der voranstehenden Ansprüche, **dadurch gekennzeichnet, dass** die Abstandshalter (5) eine elektrisch leitfähige Armierung (20) aufweisen und das Kontaktmaterial (6) in eine am Abstandshalter (5) eingebrachte Kerbe (21) eingebracht ist und den Kontakt zu der Armierung (20) und der leitfähigen Schicht (3) der Glasscheibe (1) herstellt.

8. Elektrisch beheizbare Isolierglasscheibe nach Anspruch 7, **dadurch gekennzeichnet, dass** ein Kabelanschluss (11) durch eine auf die metallische Armierung (20) befestigte Steckkontaktstelle (22) hergestellt wird.

9. Elektrisch beheizbare Isolierglasscheibe nach einem der voranstehenden Ansprüche, **dadurch gekennzeichnet, dass** die Kontaktelemente so ausgeführt sind, dass Stromstärken bis 4 A bei 230 V übertragen werden können.

10. Elektrisch beheizbare Isolierglasscheibe nach einem der voranstehenden Ansprüche, **dadurch gekennzeichnet, dass** bei der Kontaktierung von elektrochromer Verglasung der Abstandshalter (5) einen Akku zum Schalten der elektrochromen Verglasung aufweist.

11. Elektrisch beheizbare Isolierglasscheibe nach Anspruch 10, **dadurch gekennzeichnet, dass** der Akku durch ein im Glas integriertes Photovoltaikmodul gespeist wird, wodurch eine elektrische Anbindung an das elektrische Hausnetz überflüssig wird.

## Claims

1. An electrically heatable insulating glass pane for windows or glass doors, having a glass pane coated with an electrically conducting layer and spacers,
wherein the spacers (5) are configured to be electrically conducting and an electrically conducting contact material (6) is arranged on them and the spacers (5) or components of them act as contact strips for electrically contacting the electrically conducting layer (3),
**characterised in that**
the electrically conducting spacers (5) are combined with electrically non-conducting spacers (13) via corner connectors (10, 14) to form a spacer frame.

2. The electrically heatable insulating glass pane according to Claim 1, **characterised in that** the electrically conducting layer (3) is a metal oxide.

3. The electrically heatable insulating glass pane according to any one of the preceding claims, **characterised in that** the electrically conducting spacers (5) have a conductor flag (16), on which the electrically conducting contact material (6) is arranged.

4. The electrically heatable insulating glass pane according to any one of the preceding Claims 1 to 2,
**characterised in that** the electrically conducting spacers (5) have a groove (18), in which the electrically conducting contact material (6) is arranged.

5. The electrically heatable insulating glass pane according to Claim 4, **characterised in that** the electrically conducting contact material (6) is a cord (19) or a flexible tube which is configured such that it is able to be fitted into the groove (18).

6. The electrically heatable insulating glass pane according to Claim 4, **characterised in that** the electrically conducting contact material (6) is mounted onto the surface of the spacers (5) and is discharged via a fastened plug contact point (22).

7. The electrically heatable insulating glass pane according to any one of the preceding claims, **characterised in that** the spacers (5) have an electrically conductive reinforcement (20) and the contact material (6) is introduced into a notch (21) introduced on the spacer (5) and establishes the contact with the reinforcement (20) and the conductive layer (3) of the glass pane (1).

8. The electrically heatable insulating glass pane according to Claim 7, **characterised in that** a cable connection (11) is produced by a plug contact point (22) fastened onto the metallic reinforcement (20).

9. The electrically heatable insulating glass pane according to any one of the preceding claims, **characterised in that** the contact elements are designed such that current intensities up to 4 A at 230 V can be transferred.

10. The electrically heatable insulating glass pane according to any one of the preceding claims, **characterised in that**, during the contacting of electrochromic glazing, the spacer (5) has a battery for switching the electrochromic glazing.

11. The electrically heatable insulating glass pane according to Claim 10, **characterised in that** the battery is supplied by a photovoltaic module integrated in the glass, thus rendering an electrical connection to the electrical domestic network superfluous.

## Revendications

1. Plaque de verre isolante chauffable électriquement pour fenêtres ou portes vitrées, laquelle présente une plaque de verre revêtue d'une couche électriquement conductrice et des espaceurs,
les espaceurs (5) étant formés de façon électriquement conductrice et un matériau de contact électriquement conducteur (6) étant disposé sur ceux-ci, et les espaceurs (5) ou des composants de ceux-ci fonctionnant comme des bandes de contact pour la connexion électrique de la couche électriquement conductrice (3),
**caractérisée en ce que**
les espaceurs électriquement conducteurs (5) sont combinés avec des espaceurs électriquement non conducteurs (13) par des coudes de raccordement (10, 14), formant ainsi un cadre d'espaceurs.

2. Plaque de verre isolante chauffable électriquement selon la revendication 1, **caractérisée en ce que** la plaque de verre électriquement isolante (3) est un oxyde métallique.

3. Plaque de verre isolante chauffable électriquement selon l'une quelconque des revendications précédentes, **caractérisée en ce que** les espaceurs électriquement conducteurs (5) présentent une languette conductrice (16) sur laquelle le matériau de contact électriquement conducteur (6) est disposé.

4. Plaque de verre isolante chauffable électriquement selon l'une quelconque des revendications précédentes 1 à 2,
**caractérisée en ce que** les espaceurs électriquement conducteurs (5) présentent une rainure (18) dans laquelle le matériau de contact électriquement conducteur (6) est disposé.

5. Plaque de verre isolante chauffable électriquement selon la revendication 4, **caractérisée en ce que** le matériau de contact électriquement conducteur (6) est un cordon (19) ou un tuyau qui sont formés pour être insérables dans la rainure (18).

6. Plaque de verre isolante chauffable électriquement selon la revendication 4, **caractérisée en ce que** le matériau de contact électriquement conducteur (6) est appliqué sur la surface des espaceurs (5) et est dérivé par un point de contact à fiche (22) fixé.

7. Plaque de verre isolante chauffable électriquement selon l'une quelconque des revendications précédentes, **caractérisée en ce que** les espaceurs (5) présentent une armure électriquement conductrice (20) et **en ce que** le matériau de contact (6) est placé dans une encoche (21) placée sur l'espaceur (5) et établit le contact avec l'armure (20) et la couche conductrice (3) de la plaque de verre (1).

8. Plaque de verre isolante chauffable électriquement selon la revendication 7, **caractérisée en ce qu'**un raccord de câble (11) est établi par un point de contact à fiche (22) fixé sur l'armure métallique (20).

9. Plaque de verre isolante chauffable électriquement selon l'une quelconque des revendications précédentes, **caractérisée en ce que** les éléments de contact sont réalisés de telle sorte que des intensités de courant jusqu'à 4 A à 230 V peuvent être transportées.

10. Plaque de verre isolante chauffable électriquement selon l'une quelconque des revendications précédentes, **caractérisée en ce que** l'espaceur (5) présente un accumulateur pour la commutation du vitrage électrochrome, lors de la connexion du vitrage électrochrome.

11. Plaque de verre isolante chauffable électriquement selon la revendication 10, **caractérisée en ce que** l'accumulateur est alimenté par un module photovoltaïque intégré dans le verre, rendant ainsi superflu un raccordement électrique au réseau domestique électrique.
